# EUROPÄISCHE PATENTANMELDUNG

(11) **EP 4 716 161 A2**
(43) Veröffentlichungstag der Anmeldung: **25.03.2026**
(21) Anmeldenummer: 25198662.6
(22) Anmeldetag: 28.08.2025
(51) Int. Cl.: H04L 12/46

(54) **GATEWAY EINES LANDWIRTSCHAFTLICHEN ARBEITSGERÄTES**

(30) Priorität: 30.08.2024 DE 102024124930
(71) Anmelder: Kverneland Group Mechatronics BV, 2153 LR Nieuw-Vennep (NL)
(72) Erfinder: DRIESSEN, MARINUS PETRUS JOHANNES, 2153 LR Nieuw-Vennep (NL); STRAVERS, Thomas Jeroen, 2153 LR Nieuw-Vennep (NL)
(74) Vertreter: Bardehle Pagenberg Partnerschaft mbB Patentanwälte Rechtsanwälte

(57) **Zusammenfassung**

Gateway 1 eines landwirtschaftlichen Arbeitsgeräts 110 für eine bidirektionale Datenkommunikation des Arbeitsgeräts 110 mit einer Cloud 200, wobei das Gateway 1 aufweist: einen Prozessor 10; eine Geräteschnittstelle 20 zur direkten Kommunikation mit einer ECU Electronic Control Unit 120 des Arbeitsgeräts 110; eine von der Geräteschnittstelle 20 unabhängige ISOBUS-Schnittstelle 30 zur Kommunikation mit ISOBUS-Teilnehmern 400; eine Mobilfunkschnittstelle 40 zur drahtlosen Kommunikation mit einem Mobilfunknetz 202, wobei das Gateway 1 eingerichtet ist über das Mobilfunknetz 202 eine Datenverbindung zur Cloud 200 zu erstellen; einen Mehrfach-CAN-Dämon 18, zur Datenverbindung mit mehreren ISOBUS-Teilnehmern über den ISOBUS, wobei der Mehrfach-CAN-Dämon regelbasiert die Datenverbindung der ISOBUS-Teilnehmer 400 zur Cloud 200 steuert. Weiterhin wird ein Verfahren zur Erstellung einer gesicherten Datenverbindung beansprucht.

## Beschreibung

### 1. Gebiet der Erfindung

Die vorliegende Erfindung betrifft ein Gateway eines landwirtschaftlichen Arbeitsgeräts für eine bidirektionale Datenkommunikation des Arbeitsgeräts mit einer Cloud. Das Gateway stellt eine Schnittstelle zwischen der ECU des landwirtschaftlichen Arbeitsgeräts und einer Cloud dar, die Anwendungen für die Wartung, Planung und den Betrieb des landwirtschaftlichen Arbeitsgeräts bereitstellt.

### 2. Stand der Technik

Landwirtschaftliche Arbeitsgeräte sind Geräte zur Bodenbearbeitung, Mähen, Sähen, Ernten oder Aufbringen von Flüssigkeiten oder Granulaten. Die Arbeitsgeräte werden im Betrieb an einem Traktor lösbar befestigt oder von einem Traktor gezogen oder geschoben.

Heutzutage wird in der Landwirtschaft ein sog. "Digital Farming" angestrebt, also eine durch Computertechnik unterstützte Planung, Überwachung und Durchführung landwirtschaftlicher Vorgänge.

Unter dem Begriff "Precision Farming" wird ein Verfahren der ortsdifferenzierten und zielgerichteten Bewirtschaftung landwirtschaftlicher Nutzflächen verstanden. Der Begriff umfasst eine Teilmenge von digitalen Verfahrenstechniken im Rahmen der Digitalisierung in der Landwirtschaft. Ziel des "Precision Farmings" ist es dabei, die Unterschiede des Bodens und der Ertragsfähigkeit innerhalb eines Feldes zu berücksichtigen. Bestimmte Bearbeitungsvorgänge, wie beispielsweise das Ausbringen von Pflanzenschutzmitteln oder das Düngen mittels computergesteuerten Arbeitsgeräten werden so dosieren, dass nur die optimale Menge an Wirkstoff oder Düngemittel am aktuellen Ort ausgebracht wird.

Bei Digital Farming, oder auch Farming 4.0 genannt, ist eine Systemtechnik gemeint, die die bestehenden Verfahren um vier weitere Hauptkomponenten ergänzt: Internet der Dinge oder Internet of Things (IoT) oder die Maschine-zu-Maschine-Kommunikation (M2M), Cloud Computing, Big-Data-Analysen und Künstliche Intelligenz (KI) und Robotik mit mobilen und stationären Einheiten. In allen Bereichen sind bereits Entwicklungsansätze für in der Praxis nutzbare Produkte erkennbar. Erwartet wird, dass in der nahen Zukunft diese jedoch erheblich an Reife und Bedeutung gewinnen werden.

Die für ein Digital Farming oder Precision Farming notwendigen Arbeitsgeräte sind heutzutage in der Regel mittels einer elektronischen ECU versehen, die Sensoren und Aktoren des Arbeitsgerätes steuert. Die ECU weist üblicherweise eine ISOBUS Schnittstelle nach ISO 11783 auf, um mit Terminals des Traktors zu kommunizieren, auf denen dem Landwirt eine Benutzerschnittstelle zur Steuerung und/oder Überwachung des Arbeitsgeräts angezeigt werden kann.

Es sind auch Terminals bekannt, die über eine Mobilfunkschnittstelle verfügen, so dass das Terminal Daten des Traktors und des Arbeitsgeräts an räumlich entfernte Computer und deren Applikationen übertragen kann. Oftmals verwenden die Terminals zur Datenübertragung jedoch proprietäre Protokolle, so dass Terminals eines Herstellers, meist des Traktorherstellers, mit Computer-Applikationen anderer Hersteller, z.B. dem Hersteller eines Arbeitsgeräts, inkompatibel sind oder eine Datenübertragung aus sonstigen Gründen nicht möglich ist.

Es sind daher bereits Lösungen bekannt, bei denen das Arbeitsgeräts selbst eine Datenübertragung an räumlich entfernte Computer bereitstellen kann. Aus der Druckschrift WO 2020/0740043 A1 ist ein Nachrüstkit zum Anbau an ein landwirtschaftliches Gerät bekannt, welches an einen Traktor anbaubar/anhängbar ist und mit diesem in Kombination betrieben wird. Das Nachrüstkit weist eine Schnittstelle zur elektronischen Verbindung der gerätespezifischen Komponenten mit einer bedarfsweise einsetzbaren portablen Rechnereinheit. Damit sollen kostengünstig elektronische Komponenten auch noch nachträglich an landwirtschaftliche Arbeitsgeräte angebracht werden können. Hierbei hat das Nachrüstkit einerseits maschinenspezifische Komponenten, die dauerhaft an dem jeweiligen Arbeitsgerät verbleiben, sowie eine Schnittstelle, an die eine portable Rechnereinheit bedarfsweise anschließbar ist. Die gerätespezifischen Komponenten der Nachrüstkits eröffnen die Möglichkeit, einfachere mechanische Geräte mit einer intelligenten und vernetzten Elektronik aus- und nachzurüsten, ohne dass sich die landwirtschaftlichen Geräte dadurch übermäßig verteuern. Die portable Rechnereinheit weist hierbei ein Funkmodul auf, das einen Datenaustausch mit externen Geräten ermöglicht.

Es ist zu erwarten, dass ein Traktor im Betrieb mehrere Arbeitsgeräte trägt, die jeweils die Möglichkeit der Datenkommunikation aufweisen und die Datenkommunikation dann geeignet koordiniert werden muss.

### 3. Zusammenfassung der Erfindung

Die vorliegende Erfindung betrifft ein Gateway gemäß Anspruch 1, ein System gemäß Anspruch 7 und ein Verfahren gemäß Anspruch 15.

Insbesondere betrifft die Erfindung ein Gateway eines landwirtschaftlichen Arbeitsgeräts für eine bidirektionale Datenkommunikation des Arbeitsgeräts mit einer Cloud, wobei das Gateway aufweist einen Prozessor; eine Geräteschnittstelle zur direkten Kommunikation mit einer ECU (Electronic Control Unit) des Arbeitsgeräts eine von der Geräteschnittstelle unabhängige ISOBUS-Schnittstelle zur Kommunikation mit ISOBUS-Teilnehmern; eine Mobilfunkschnittstelle zur drahtlosen Kommunikation mit einem Mobilfunknetz, wobei das Gateway eingerichtet ist über das Mobilfunknetz eine Datenverbindung zur Cloud zu erstellen; einen Mehrfach-CAN-Dämon, zur Datenverbindung mit mehreren ISOBUS-Teilnehmern über den ISOBUS, wobei der Mehrfach-CAN-Dämon regelbasiert die Datenverbindung der ISOBUS-Teilnehmer zur Cloud steuert.

Der Prozessor steuert das Gateway. Der Prozessor kann ein üblicher 1-Chip-Computer mit CPU, RAM-Speicher, ROM-Speicher, Betriebssystem und Firmware sein.

Durch die Geräteschnittstelle ist das Gateway in der Lage mit der ECU des Arbeitsgeräts zu kommunizieren, um beispielsweise Steuerungsparameter auszulesen. Weiterhin können über die Geräteschnittstelle Steuerungsparameter an die Gerätessteuerung übertragen werden und somit das landwirtschaftliche Arbeitsgerät gesteuert werden. Zudem kann die ECU des Arbeitsgeräts auch über die ECU mit Strom versorgt werden, wenn diese keine eigene Stromversorgung aufweisen sollte.

Über die zusätzliche ISOBUS-Schnittstelle kann das Gateway mit anderen ISOBUS-Teilnehmern des Systems kommunizieren, beispielsweise mit einer Steuerung eines Traktors oder anderen Gateways oder ECUs von weiteren Arbeitsgeräten am Traktor. Insbesondere kann das Gateway über die ISOBUS-Schnittstelle mit einem Benutzerterminal kommunizieren, das sich bevorzugt in der Fahrerkabine des Traktors befindet. Ein solches Terminal kann daher eine Benutzer-Schnittstelle für das Gateway zur Kommunikation mit dem Benutzer darstellen. Entsprechend braucht das Gateway keine eigene Benutzer-Schnittstelle bereitzustellen. Die Kommunikation mit ISOBUS-Teilnehmern erfolgt bevorzugt gemäß dem ISO 11783 Standard. Weiterhin kann das Gateway über die ISOBUS-Schnittstelle auch mit der ECU des Arbeitsgeräts kommunizieren, um beispielsweise Sensordaten auszulesen. Weiterhin ist es möglich über die ISOBUS-Schnittstelle Diagnose- und Serviceinformationen mit der ECU des Arbeitsgeräts über das DSI-Protokoll auszutauschen.

Mittels der Mobilfunkschnittstelle ist das Gateway in der Lage selbständig eine Verbindung in ein Mobilfunknetz herzustellen und zu nutzen. Damit hat das Gateway insbesondere eine eigene drahtlose Datenverbindung ins Internet, um damit die Cloud zu erreichen und zu nutzen. Durch das Gateway wird somit eine Verbindung des landwirtschaftlichen Arbeitsgeräts mit dem Internet hergestellt ohne auf den Traktor oder andere Geräte angewiesen zu sein. Damit kann das Gateway selbständig Daten an Cloud-Applikationen übertragen und Daten, insbesondere Steuerungsparameter, von Cloud-Applikationen empfangen. Hierbei sendet das Gateway bevorzugt Protokollpuffernachrichten (ProtoBuff) über eine TCP/IP Verbindung mittels SSL/TLS. In der Zukunft kann es jedoch auch weitere Schnittstellen zwischen dem Gateway und der Cloud geben.

Ein Dämon ist hierbei eine Softwareapplikation, die bevorzugt im Hintergrund abläuft und die keine Interaktion mit dem Benutzer hat. Ein Dämon ist in der Softwaretechnik bekannt. Ein Mehrfach-CAN-Dämon führt bevorzugt unterschiedliche Aufgaben durch, wie das Handling von Anfragen (Requests), das Managen von Diensten (Services), und das Aufrechterhalten von Systemoperationen, wie beispielsweise ein Sammeln von Daten von den ISOBUS- oder anderen CAN-Leitungen.

Mittels des Mehrfach-CAN-Dämons kann die Datenübertragung mit anderen ISOBUS-Teilnehmern geregelt werden. Hierbei legt der Mehrfach-CAN-Dämon regelbasiert fest, welcher ISOBUS-Teilnehmer eine Datenverbindung zur Cloud aufbauen darf und welcher nicht. Beispielsweise könnten erfindungsgemäße Gateways eine Priorität zur Datenübertragung vor anderen ISOBUS-Teilnehmern, wie beispielsweise internetfähige Terminals des Traktors erhalten. Weiterhin könnten ein Gateway gegenüber anderen Gateways nach festgelegten Kriterien, wie beispielsweise der Anordnung des entsprechenden Arbeitsgeräts an dem Traktor, die Hierarchie der Gateways zueinander, die aktuelle Prozessorbelastung der Gateways, der aktuelle Akkustand der Gateways, etc. zur Datenübertragung mit der Cloud priorisiert werden. Durch den Mehrfach-CAN-Dämon kann damit dasjenige Gateway ausgewählt werden, das die besten Voraussetzungen für eine gute Datenübertragung an die Cloud bereitstellt. Doppelte oder mehrfache Datenübertragungen an die Cloud werden vermieden. Dadurch wird die Datenkonsistenz der in der Cloud vorhandenen Daten verbessert. Zudem wird elektrische Energie der Gateways insgesamt eingespart, wenn nur ein Gateway eine Mobilfunkverbindung aufrecht-erhalten muss.

Bevorzugt, weist der Mehrfach-CAN-Dämon ein Kontext-Analysemodul auf, das über den ISOBUS angeschlossene Terminals oder weitere Gateways anderer landwirtschaftlicher Arbeitsgeräte identifiziert, wobei der Mehrfach-CAN-Dämon einen der Gateways zur Datenübertragung an die Cloud priorisiert. Das Kontext-Analysemodul kann damit Terminal und andere Gateways erkennen und identifizieren, beispielsweise über AEF, das ISOBUS-Protokoll, oder einem Herstellercode. Damit kann beispielsweise erkannt werden, welches landwirtschaftliche Arbeitsgeräte einem bestimmten Gateway zugeordnet ist und dem Gateway aufgrund einer solchen Information Priorität zur Datenübertragung an die Cloud eingeräumt werden. Beispielsweise kann zumindest ein Gateway Priorität erhalten, dessen Arbeitsgerät im Betrieb die meisten Daten für die Cloud liefert oder von der Cloud online Steuerungsdaten erhält. Andere weniger zeitkritische Daten von anderen Arbeitsgeräten könnten hingegen im entsprechenden Gateway zwischengespeichert werden und erst zu einem geeigneten späteren Zeitpunkt an die Cloud übermittelt werden. Ein solches Gateway würde dann keine Priorität erhalten.

Bevorzugt weist das Gateway weiterhin eine Gateway-interne wiederaufladbare Stromquelle auf. Damit ist das Gateway vom Traktor energieautark und kann auch betrieben werden, wenn das landwirtschaftliche Arbeitsgerät nicht am Traktor angeschlossen ist. Bevorzugt kann die Gateway-interne Stromquelle sogar die ECU des Arbeitsgeräts mit Strom versorgen, um etwa zu Wartungszwecken Einstellungsparameter der ECU auszulesen oder zu verändern, wenn das Arbeitsgerät gerade nicht im Einsatz ist. Bevorzugt wird die Gateway-interne wiederaufladbare Stromquelle über den ISOBUS vom Traktor aufgeladen.

Zusätzlich ist bevorzugt die Gateway-interne wiederaufladbare Stromquelle über eine Solarzelle aufladbar. Damit ist das Gateway auch dann betriebsbereit, wenn es über eine längere Zeit im Freien steht und nicht an einen Traktor angeschlossen ist.

Bevorzugt weist das Gateway weiterhin aufweisend ein Schutzgehäuse auf, welches das Gateway umgibt und welches über Befestigungsmittel fest mit dem Arbeitsgerät verbunden ist.

Bevorzugt weist das Gateway weiterhin eine Bluetooth-Schnittstelle auf zur Kommunikation mit einem Mobilgerät. Das Mobilgerät kann bevorzugt ein Smartphone oder ein Tablet sein. Über das Mobilgerät kann der Benutzer bevorzugt Einstellungen an der ECU vornehmen. Bevorzugt dient das Mobilgerät als Benutzer-Schnittstelle für das Gateway. Einstellungen für die ECU können auch durch eine Applikation auf dem Mobilgerät berechnet werden und über das Gateway an die ECU übertragen werden.

Bevorzugt weist das Gateway weiterhin einen GNSS-Empfänger auf, zum Empfang von Positionsdaten von einem globalen Satellitennavigationssystem. Ein solcher GNSS-Empfänger kann beispielsweise ein GPS-, ein Galileo-, ein Beidou, oder ein GLONASS-Empfänger sein.

Bevorzugt ist der Prozessor eingerichtet ist, das Gateway in vordefinierten Zeitabständen aus einem Schlafzustand aufzuwecken, um dann ausgewählte Daten, insbesondere Positionsdaten, an die Cloud zu übertragen. Wenn das Gateway nicht in Verwendung ist, geht es bevorzugt nach einer gewissen Zeit in einen Schlafzustand über, um elektrische Energie der internen Stromquelle zu sparen. Jedoch weckt der Prozessor das Gateway in vordefinierten Zeitabständen auf, beispielsweise einmal jede Stunde, oder einmal jeden Tag, um der Cloud-Applikation in regelmäßigen Abständen die Position des landwirtschaftlichen Arbeitsgeräts mitgeteilt werden, um diese beispielsweise leicht wiederaufzufinden, wenn es bewegt wurde, oder um mittels Geofencing einen Diebstahl des Arbeitsgeräts zu erkennen.

Bevorzugt weist das Gateway weiterhin einen Datenpufferspeicher auf, der eingerichtet ist, alle vom Gateway über mindestens eine Woche erfassten Daten zwischenzuspeichern für den Fall, dass die Datenverbindung des Gateways zur Cloud unterbrochen ist. Der Datenpuffer verhindert einen Datenverlust für Daten der aktuellen Verwendung des Arbeitsgeräts für den Fall, dass die Kommunikation mit der Could nicht verfügbar ist oder unterbrochen wird.

Bevorzugt ist die ISOBUS-Schnittstelle eingerichtet zur Kommunikation mit einem externen Terminal, das eine Benutzerschnittstelle des Gateways bereitstellt. Das Gateway kann mittels der ISOBUS-Schnittstelle externe Terminals als Benutzerschnittstelle nutzen, beispielsweise ein Terminal in einer Fahrerkabine eines Traktors.

Bevorzugt weist das Gateway weiterhin ein WLAN-Modul zum Erzeugen eines lokalen WLAN-Hotspots auf, um eine Internetverbindung für externe WLAN-Geräte über das Gateway bereitzustellen, wobei das WLAN-Modul eine dynamische Firewall umfasst, die eine Internetverbindung über das Gateway nur für registrierte WLAN-Geräte zulässt. Damit können im Gateway registrierter WLAN-Geräte über das Gateway einen Internetzugang erhalten, beispielsweise ECUs ohne eigenes Gateway. Das Gateway kann somit drahtlos mehrere landwirtschaftliche Arbeitsgeräte mit eigenen ECUs mit der Cloud verbinden.

Bevorzugt weist das Gateway weiterhin einen Bewegungssensor auf, wobei das Gateway eingerichtet ist aufgrund einer durch den Bewegungssensor festgestellten Bewegung aus einem Schlafzustand aufzuwachen und Positionsdaten an die Cloud zu senden. Damit kann das Gateway beispielsweise im Falle eines Diebstahls oder bei sonstiger Bewegung aus dem Schlafzustand erwachen und seine aktuelle Position einer Cloud-Applikation mitteilen.

Bevorzugt weist das Gateway weiterhin ein Audio- oder Spracheingabemodul auf, wobei das Gateway so konfiguriert ist, dass es aus einem Schlafzustand aufwacht, basierend auf spezifischen Audiotriggern oder Sprachbefehlen, die vom Audioeingabemodul erkannt werden. Dadurch kann das Gateway aufwachen, wenn akustische Signale wie ein vordefiniertes Aufwachwort, ein lautes Geräusch oder ein ungewöhnliches Klangmuster auftreten, die auf Ereignisse wie unbefugten Zugriff oder Umweltveränderungen hinweisen. Nach dem Aufwachen kann das Gateway seine Positionsdaten oder andere relevante Informationen an eine Cloud-Anwendung senden, um reaktionsschnelle Maßnahmen wie Tracking, Alarmierung oder weitere Analysen zu ermöglichen.

Bevorzugt werden die obigen Probleme auch gelöst durch ein System, aufweisend ein landwirtschaftliches Arbeitsgerät, ein Gateway wie vorstehend beschrieben und eine in der Cloud ablaufende Cloud-Applikation, wobei die Cloud-Applikation Daten des Arbeitsgeräts von dem Gateway empfängt und Daten über das Gateway an eine ECU des Arbeitsgeräts sendet. Somit kann das Arbeitsgerät mittels Daten von einer Cloud-Applikation überwacht, gewartet, optimiert oder im Betrieb online gesteuert werden.

Bevorzugt sind das Gateway und die Cloud-Applikation eingerichtet, Daten auszutauschen für mindestens eine der folgenden Funktionen:
Flottenmanagement Funktionen;
Geofencing Funktionen;
Fernservice und Fernsupport Funktionen;
Transfer von Dateien;
Optimierung der Steuerungsparameter des Arbeitsgeräts vor und/oder während des Betriebs;
Vorrausschauende Wartung des Arbeitsgeräts und/oder
Over-the-air Updates der ECU des Arbeitsgeräts (110) oder des Gateways.

Mittels Fernservice and Fernsupport Funktionen In einer Fernwartungssitzung kann der Benutzer (typischerweise ein Ingenieur eines Autohauses, einer Vertriebsgesellschaft oder eines Forschungs- und Entwicklungsteams) hochentwickelte Werkzeuge verwenden, um die Maschine und das Steuergerät zu diagnostizieren und zu reparieren. Beispielsweise sind folgende Funktionen möglich:
- Lesen und Speichern von Betriebswerten
- Lesen, Speichern und Zurücksetzen von Diagnose- und Fehlersuchcodes
- Auslesen, Speichern und Zurücksetzen einer Fehler- und Ereignisliste
- Parameter lesen, speichern, zurücksetzen und bearbeiten
- Verfolgen und Speichern von Sensormesswerten
- Verfolgen und Speichern des angeschlossenen CAN-Busses
- Aktualisieren der Maschinen-ECU-Software

Bevorzugt weist die Softwareapplikation ein Optimierungsmodul auf, das eine künstliche Intelligenz aufweist, um Steuerungsparameter des landwirtschaftlichen Arbeitsgeräts zu optimieren, wobei die optimierten Steuerungsparameter von der Cloud über das Gateway an die ECU des Arbeitsgeräts übertragen werden. Das Optimierungsmodul in der Cloud verwendet künstliche Intelligenz, um Steuerungsparameter des Arbeitsgeräts zu optimieren. Dabei kann eine Cloud-Applikation beispielsweise die Leistungsdaten von mehreren gleichartigen Arbeitsgeräten, bevorzugt auch von mehreren landwirtschaftlichen Betrieben, sammeln und auswerten. Je größer der Datensatz ist, desto zuverlässiger wird die Optimierung. Das Arbeitsgerät speichert während des Betriebs Leistungsdaten und Sensordaten, beispielsweise den Kraftstoffverbrauch, die Betriebszeit, die Geschwindigkeit, die Bodenbedingungen, Bilddaten, etc. Die Cloud-Applikation kann daraus Profile für eine Voreinstellung des Arbeitsgeräts erstellen, um einen bestimmten Parameter zu optimieren. Beispielsweise können die Voreinstellungen des Arbeitsgeräts hinsichtlich der kürzesten Bearbeitungsdauer, des geringsten Kraftstoffverbrauchs oder geringster Emissionen optimiert werden.

Bevorzugt empfängt das Optimierungsmodul während der Verwendung des landwirtschaftlichen Arbeitsgeräts Sensordaten des landwirtschaftlichen Arbeitsgeräts über das Gateway und berechnet daraus die Steuerungsparameter in Echtzeit und überträgt diese über das Gateway an die ECU . Damit ist eine Online-Optimierung und Steuerung des Arbeitsgeräts durch die Cloud während der Verwendung des Arbeitsgeräts möglich.

Bevorzugt detektiert das Optimierungsmodul aus den übertragenen Daten Anomalien im Betrieb des landwirtschaftlichen Arbeitsgerätes und berechnet daraus mit der künstlichen Intelligenz optimierte Steuerungsparameter oder Wartungsaktionen und zeigt diese über ein ISOBUS-Terminal oder einen Wartungscomputer anzeigt. Beispielsweise kann das Optimierungsmodul hiermit Anomalien wie einen zu hohen Kraftstoffverbrauch, Schlupf, basierend auf einem Unterschied zwischen der Traktor-(Eingangs)geschwindigkeit und der Arbeitsgerät-(Ausgangs)geschwindigkeit, eine zu hohe Beladung, eine zu lange Bearbeitungszeit erkennen. Anomalien können so gegenüber gespeicherten Standardwerten erkannt werden oder indem die ermittelten Daten mit Daten anderer gerade verwendeter Arbeitsgeräte der gleichen Art verglichen werden. Diese Anomalien können dann dem Benutzer als Alarm oder in regelmäßigen Abständen angezeigt werden.

Bevorzugt berechnet das Optimierungsmodul aus den übertragenen Daten aktuelle Leistungswerte des landwirtschaftlichen Arbeitsgerätes und vergleicht diese mit einem vorab gespeicherten Satz von Leistungswerten des Typs des landwirtschaftlichen Arbeitsgerätes, um Abweichungen von einem optimalen Betrieb zu ermitteln. Die Cloud-Applikation kann hiermit auch prüfen, ob das Arbeitsgerät die korrekten Einstellparameter verwendet. Die Cloud-Applikation kann weiterhin einen Reparaturvorschlag machen, um die Anomalie zu beheben. Beispielsweise kann die Cloud-Applikation vorschlagen, die Arbeitsbreite des Arbeitsgeräts anzupassen, verschlissene Lager auszutauschen oder die Geschwindigkeit des Traktors herunterzusetzen. Hierbei kann es auch Korrelationen zwischen bestimmten Einstellungen geben, beispielsweise zwischen der Arbeitsbreite des Arbeitsgeräts und der Traktorgeschwindigkeit, die berücksichtigt werden.

Im Rahmen des "Predictable Maintenance" kann die künstliche Intelligenz des Optimierungsmoduls bevorzugt weiterhin aufgrund der aktuellen Leistungsdaten und einem großen Satz von gespeicherten Leistungsdaten Abweichungen von einem optimalen Betrieb des Arbeitsgeräts erkennen. Damit werden die Daten der aktuellen Arbeitsaufgabe mit ähnlichen Arbeitsaufgaben anderer Arbeitsgeräte oder Standardeinstellungen oder Standardprofilen verglichen. Beispielsweise wird dadurch erkannt, wenn die Aufgabe länger dauert als normal, ein Aktuator ausfällt, oder die Systemstabilität verringert ist.

Die künstliche Intelligenz des Optimierungsmoduls kann weiterhin bevorzugt aus den erkannten Abweichungen gegenüber dem Optimalbetrieb den Benutzer die wahrscheinlichsten Reparaturvorschläge unterbreiten. Beispielsweise kann dies eine bloße Anpassung der Einstellparameter des Traktors oder des Arbeitsgeräts sein, oder einen Vorschlag für eine Reparatur und der Zeitpunkt wenn diese Reparatur benötigt wird, oder einen Vorschlag an den Benutzer die Verwendung des Arbeitsgeräts manuell zu modifizieren, beispielsweise die Geschwindigkeit zu reduzieren, wenn die Lager nicht getauscht werden.

Andererseits kann der Benutzer auch über die Cloud-Applikation die Ziel-Produktivität, die Ziel-Zeit oder die Ziel-Kosten vorgeben. Beispielsweise kann bei einer Stroh-Ballenpresse der maximale Durchsatz in kg/h, die Anzahl der Ballen, die Ballendichte, das durchschnittliche Gewicht, die Ballenpresskosten oder der Profit aus den Ballen basierend auf den Geschäftsanforderungen vorgegeben werden. Die Cloud-Applikation könnte auch für eine Registrierung der CO2-Einsparungen verwendet werden. Das Gateway des Arbeitsgeräts ermittelt daraufhin Sensordaten, beispielsweise die Feuchtigkeit und das Gewicht des Strohs und die aktuellen Einstellungswerte des Arbeitsgeräts und sendet diese an die Cloud-Applikation. Die Cloud-Applikation berechnet hieraus die optimierten Einstellungsparameter (beispielsweise die Dichte und das Gewicht der Ballen) für die Ballenpresse basierend auf dem ausgewählten Profil und durch Vergleich mit dem gespeicherten Satz von Daten, die als Trainingsdaten der künstlichen Intelligenz dienen. Die Cloud-Applikation sendet dann diese Daten automatisch an das Gateway oder der Bediener startet manuell einen Download dieser Daten. Das Gateway justiert damit die Einstellungswerte der Ballenpresse oder des Traktors, so dass die Ballenproduktion entsprechend den Geschäftsanforderungen durchgeführt werden kann.

Bevorzugt sendet die Cloud-Applikation eine Push-Nachricht an das Terminal im Traktor, damit der Benutzer die Einstellparameter des Arbeitsgerätes manuell ändern kann. In einer Alternative kann die Cloud-Applikation die Einstellparameter des Arbeitsgerätes automatisch über das Gateway selbst ändern. Hierbei kann der Benutzer bevorzugt den Grad des Hinweises oder der automatischen Einstellung vorab festlegen.

Bevorzugt weist das System weiterhin ein Mobilgerät auf, wobei das Mobilgerät eine Geräte-Softwareapplikation aufweist, die zur Kommunikation des Mobilgeräts über Bluetooth mit dem Gateway eingerichtet ist, wobei die Geräte-Softwareapplikation ein Optimierungsmodul aufweist, das Steuerungsparameter für das Arbeitsgerät berechnet und die Geräte-Softwareapplikation eingerichtet ist, die berechneten Steuerungsparameter über das Gateway an das Arbeitsgerät zu übertragen. Alternativ zur Verwendung einer Cloud-Applikation, kann die Optimierung der Steuerungsparameter auch mittels einer Geräte-Softwareapplikation erfolgen die auf einem Mobilgerät, beispielsweise einem Smartphone oder Tablet, läuft. Damit kann die Optimierung ohne Verbindung zu einer Cloud durchgeführt werden. Die Geräte-Softwareapplikation kann jedoch von Zeit zu Zeit eine Verbindung zur Cloud aufbauen, um etwa neue Datenwerte für neue Materialien oder neue Produkte zu empfangen.

Bevorzugt ermittelt das Gateway die Entfernung des Mobilgeräts zum Gateway und aktiviert oder deaktiviert basierend auf der Entfernung Funktionen des Gateways und/oder des Arbeitsgeräts. Beispielsweise kann das Gateway die Gerätsteuerung starten, wenn sich der Benutzer dem Arbeitsgerät nähert, um diese neu zu verwenden. Umgekehrt kann das Gateway in den Schlafzustand gehen, wenn sich der Benutzer vom Arbeitsgerät weit genug entfernt, was elektrische Energie spart.

Weiterhin betrifft die Erfindung ein Verfahren zur Erstellung einer gesicherten Datenverbindung eines Gateways eines landwirtschaftlichen Arbeitsgeräts, insbesondere eines Gateways wie vorstehend beschrieben, für eine bidirektionale Datenkommunikation des Arbeitsgeräts mit einer Cloud, aufweisend die folgenden Schritte:
Erzeugen einer Verbindungsanfrage von dem Gateway über eine Mobilfunkschnittstelle an eine in der Cloud ablaufende Cloud-Applikation (210) wobei die Verbindungsanfrage einen eindeutigen ersten Code enthält;
Empfangen des ersten Codes durch die Cloud-Applikation (210) und Erzeugen durch die Cloud-Applikation (210) aus dem ersten Code einen eindeutigen zweiten Code;
Senden des zweiten Codes durch Cloud-Applikation an das Gateway (1);
Anzeigen des zweiten Codes durch das Gateway (1) auf einer Benutzerschnittstelle eines externen Terminals (310);
(manuelles) Ablesen des zweiten Codes;
(manuelles) Eingeben des zweiten Codes in die Cloud-Applikation (210);
Prüfen des zweiten Codes durch die Cloud-Applikation (210); und
nach erfolgreicher Prüfung, Erstellen einer gesicherten bidirektionalen Datenverbindung der Cloud (200) mit dem Gateway (1) zum Austausch von Daten einer ECU (120) des Arbeitsgeräts (110) mit der Cloud-Applikation (210).

Durch das Verfahren ist sichergestellt, dass die Verbindungsanfrage an die Cloud-Applikation von dem richtigen Gateway gesendet wurde und kein unerlaubter Zugriff auf die Cloud-Applikation erfolgt ist. Die Datenverbindung wird erst durch das manuelle Ablesen des zweiten Codes auf einer Benutzerschnittstelle des Gateways durch einen Benutzer und durch das manuelle Eingeben des abgelesenen zweiten Codes in die Cloud-Applikation verifiziert. Ein Datenmissbrauch oder ein Missbrauch des Arbeitsgeräts wird damit verhindert. Dieses Verfahren wird bevorzugt für den Fall verwendet, wenn eine Remote-Service-Sitzung zwischen dem Gateway oder Terminal und einer Cloud-/Desktop-Service-Anwendung über eine Virtual Private Network (VPN)-Verbindung aufgebaut wird. Da die Funktionsweise des Arbeitsgeräts in Echtzeit angepasst werden kann, haben wir diese Verbindungsmethode aus Sicherheitsgründen eingeführt.

Da die Funktionsweise der Maschine in Echtzeit angepasst werden kann, haben wir diese Verbindungsmethode aus Sicherheitsgründen eingeführt.

Bevorzugt ist die Cloud-Applikation eingerichtet für mindestens eine der folgenden Funktionen:
Flottenmanagement Funktionen;
Geofencing Funktionen;
Fernservice und Fernsupport Funktionen;
Transfer von Dateien;
Optimierung der Steuerungsparameter des Arbeitsgeräts vor und/oder während des Betriebs;
Vorrausschauende Wartung des Arbeitsgeräts und/oder
Over-the-air Updates der ECU des Arbeitsgeräts oder des Gateways.

Die oben genannte Aufgabe wird ebenfalls gelöst durch ein Verfahren zur Übertragung von Daten eines landwirtschaftlichen Arbeitsgeräts mittels eines Gateways in einem System, bevorzugt einem System wie vorstehend beschrieben, zu einer Cloud, aufweisend die folgenden Schritte:
Empfangen einer Nachricht über eine ISOBUS-Schnittstelle, die eine Eingabe eines Gateways oder ISOBUS-Teilnehmers anzeigt;
Bestimmen der empfangenen Nachricht unter Verwendung eines Kontextanalysemoduls des Gateways, um das Vorhandensein von Identifikatoren zu bestimmen, die einem vordefinierten Satz von in einem System registrierten Endgerätediensten zugeordnet sind;
Bestimmen, dass die empfangene Nachricht jegliche Daten ausschließt, die für einen gegebenen Endgerätedienst der mehreren Endgerätedienste bestimmt sind, die bei dem System registriert sind;
als Reaktion auf das Bestimmen, Identifizieren eines Gateways unter mehreren bei dem System registrierten Gateways, um die empfangene Nachricht zu verarbeiten; und
Veranlassen des identifizierten Gateways, die Nachricht an die Cloud zu senden.

Durch dieses Verfahren werden Nachrichten die an einen ISOBUS-Teilnehmer des Systems gerichtet sind von Nachrichten unterschieden, die an die Cloud gesendet werden sollen. Damit erfolgt an die Cloud nur eine Übertragung der für sie relevanten Daten.

### 4. Kurze Beschreibung der Zeichnungen

Im Folgenden werden bevorzugte Ausführungsformen der Erfindung mit Bezug auf die Zeichnungen kurz beschrieben:
- Fig. 1:: zeigt eine schematische Darstellung einer bevorzugten Ausführungsform eines Systems aufweisend ein landwirtschaftliches Arbeitsgerät, ein Gateway und eine in der Cloud ablaufende Cloud-Applikation.
- Fig. 2:: zeigt eine schematische Darstellung einer bevorzugten Ausführungsform eines Gateways.
- Fig. 3:: zeigt eine Seitenansicht einer bevorzugen Ausführungsform eines Gateways und einer ECU .
- Fig. 4:: zeigt einen Entscheidungsbaum zur Priorisierung von Gateways und Terminals in einem ISOBUS-System.
- Fig. 5:: zeigt ein Ablaufdiagramm zur Priorisierung von Gateways und Terminals in einem ISOBUS-System.

### 5. Detaillierte Beschreibung bevorzugter Ausführungsformen

In der Folge werden bevorzugte Ausführungsformen der Erfindung mit Bezug auf die Zeichnungen beschrieben.

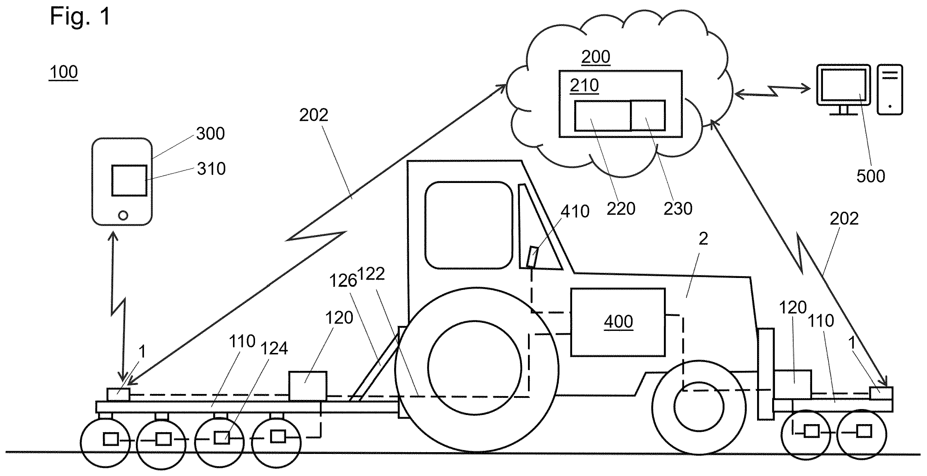

Fig. 1 zeigt ein landwirtschaftliches System 100 das für Digital Farming eingerichtet ist. Das System 100 weist einen Traktor 2 auf, an dem beispielhaft zwei landwirtschaftliche Arbeitsgeräte 110 angebracht sind. Wie dargestellt, kann beispielsweise ein Arbeitsgerät 110 an der Front des Traktors 2 angebracht sein, und ein Arbeitsgerät am Heck des Traktors. Selbstverständlich sind je nach Anwendung auch andere Anbaupositionen möglich, beispielweise an den Seiten des Traktors 2, o.ä. Es kann auch nur ein Arbeitsgerät 110 oder mehr als zwei Arbeitsgeräte 110 am Traktor angebracht sein oder von diesem gezogen oder geschoben werden.

Ein landwirtschaftliches Arbeitsgerät 110 kann beispielsweise eine Ballenpresse, ein Pflug, ein Sprühgerät, eine Streumaschine, eine Sämaschine, oder ein beliebiges anderes Gerät für eine landwirtschaftliche Anwendung sein, das von einem Traktor 2 bewegt wird.

Das Arbeitsgerät 110 weist eine ECU 120 auf, die die Funktionen des Arbeitsgeräts überwacht und steuert. Die ECU 120 kann hierzu beispielsweise Sensoren 124 auslesen, die bestimmte Leistungsparameter des Arbeitsgeräts messen, beispielsweise Kräfte, Geschwindigkeiten, Distanzen, etwa die Entfernung des Arbeitsgeräts zum Boden, Drehzahlen, Feuchtigkeit, Gewichte, etwa das Gewicht von geernteten Produkten oder Strohballen, etc. Weiterhin kann die ECU 120 Motoren oder Aktoren 126 des Arbeitsgeräts 110 steuern, beispielsweise hydraulische Aktoren 126 die das Arbeitsgerät anheben oder absenken. Die ECU 110 ist weiterhin über eine Schnittstelle mit einen ISOBUS 122 des Systems 110 datentechnisch verbunden.

Der Traktor 2 weist eine Steuerung 400 auf, die ebenfalls an den ISOBUS 122 des Systems angeschlossen ist. Der Traktor 2 verfügt weiterhin in der Bedienerkabine über ein Terminal 410, das mit der Steuerung 400 kommuniziert und ebenfalls an den ISOBUS 122 angeschlossen ist. Das Terminal 410 weist bevorzugt einen Touchscreen auf, und ermöglicht somit die Anzeige einer Benutzerschnittstelle sowie Benutzereingaben.

Jedes der beiden dargestellten Arbeitsgeräte 110 weist weiterhin ein Gateway 1 auf. Das Gateway 1 ermöglicht dem Arbeitsgerät 110 eine bidirektionale Datenkommunikation mit einer Cloud 200. Insbesondere ermöglicht das Gateway 1 eine solche Datenkommunikation der ECU 120 des Arbeitsgeräts mit einer in der Cloud 200 ablaufenden Cloud-Applikation 210.

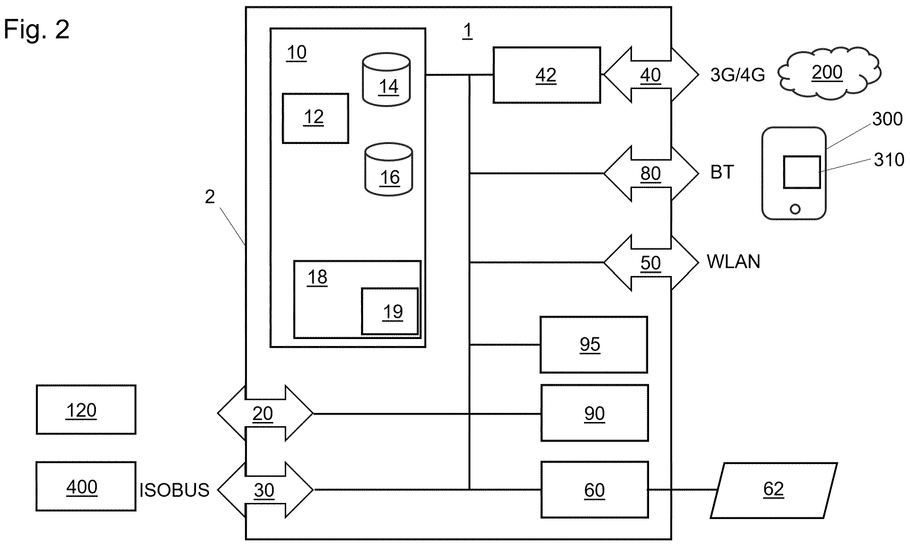

Wie in Fig. 2 dargestellt, weist das Gateway einen Prozessor 10, eine Geräteschnittstelle 20, eine ISOBUS-Schnittstelle 30, und eine Mobilfunkschnittstelle 40 auf.

Der Prozessor 10 steuert den Gateway 1 und führt die notwendigen Berechnungen und Protokollumsetzungen durch. Bevorzugt ist der Prozessor 10 ein 1-Chip-Computer mit einer CPU 14, RAM-Speicher 14 und ROM-Speicher 16. Der Prozessor 10 verfügt in üblicher Weise über ein Betriebssystem und Firmware zur Ausführung der Funktionen des Gateways 1. Weiterhin weist der Prozessor 10 in seiner Firmware einen Mehrfach-CAN-Dämon 18 auf, der eine Datenverbindung von ISOBUS-Teilnehmern (400) des Systems regelbasiert steuert.

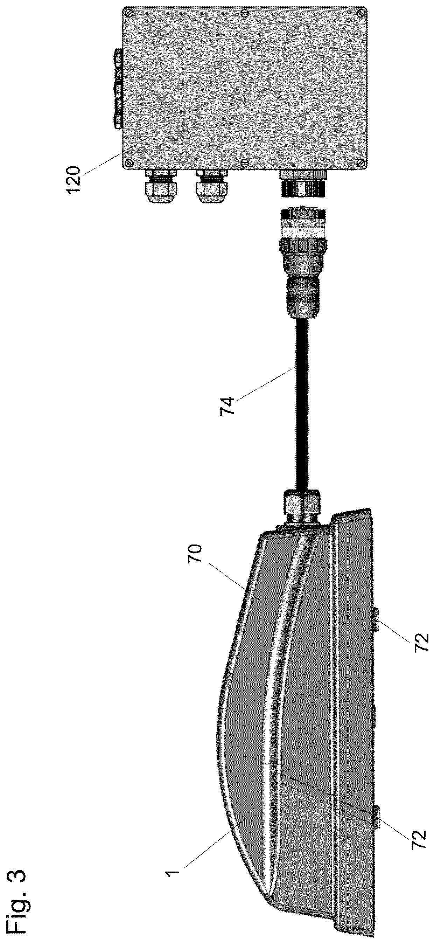

Die Geräteschnittstelle 20 dient der direkten datentechnischen Kommunikation des Gateways 1 mit der ECU 120 des Arbeitsgeräts. Entsprechend wird das Gateway 1 durch die Geräteschnittstelle 20 über ein direktes Schnittstellenkabel 74 (s. Fig. 3) mit der ECU 120 verbunden. Über die Geräteschnittstelle 20 kann das Gateway 1 das Arbeitsgerät mit einem proprietären Protokoll steuern, Einstellparameter auslesen und setzen, Sensordaten auslesen, Fehlermeldungen empfangen, Leistungsparameter während des Betriebs empfangen und ähnliches. Weiterhin kann das Gateway 1 die ECU 120 mit Strom versorgen oder von der ECU 120 mit Strom versorgt werden. Bevorzugt ist die Geräteschnittstelle 20 eine CAN-Bus-Schnittstelle, die unabhängig vom ISOBUS ist. Weiterhin dient die Geräteschnittstelle 20 zur Datenkommunikation in besonderen Anwendungsfällen, etwa wenn mittels einer Mobilfunkapplikation Einstellungsparameter an das Arbeitsgerät gesendet werden.

Die ISOBUS-Schnittstelle 30 dient der Kommunikation des Gateways mit weiteren ISOBUS-Teilnehmern im System 100, beispielsweise mit der Steuerung 400 des Traktors 2 oder mit dem Terminal 410 des Traktors 2. Die ISOBUS-Schnittstelle 30 dient weiterhin auch zu einer zusätzlichen Kommunikation des Gateways 1 mit der ECU 120 des Arbeitsgeräts 1, insbesondere zum Empfang von Sensordaten und Fehlermeldungen.

Die Mobilfunkschnittstelle 40 ermöglicht die eine drahtlose Kommunikation des Gateways 1 mit einem Mobilfunknetz 202. Hierbei unterstützt die Mobilfunkschnittstelle 40 gewöhnliche Mobilfunkstandards, wie etwa 3G (UMTS), 4G (LTE), 5G oder 6G. Insbesondere weist die Mobilfunkschnittstelle 40 ein Autorisierungsmodul 42, beispielsweise ein SIM-Kartenmodul oder ein eSIM-Modul, zur Autorisierung des Gateways 1 im Mobilfunknetz 202. Über das Mobilfunknetz 202 kann das Gateway 1 auf das Internet zugreifen und die Cloud 200 erreichen.

Die Cloud 200 kann als eine Public-Cloud oder eine Private-Cloud ausgebildet sein und stellt dem System ein oder mehrere Cloud-Applikationen 210 bereit. Auf die Cloud-Applikationen 210 kann weiterhin von Benutzern über einen oder mehrere externe Rechner 500 zugegriffen werden. Die Cloud-Applikationen 210 können Applikationen umfassen, mit denen der Landwirt seine Feldarbeit planen und steuern kann. Insbesondere kann der Landwirt hiermit den Einsatz der Arbeitsgeräte 110 planen, steuern und optimieren. Hierbei können die Cloud-Applikationen 210 beispielsweise Flottenmanagement Funktionen und Geofencing Funktionen für den Landwirt bereitstellen.

Weiterhin können die Cloud-Applikationen 210 Applikationen umfassen, mit denen Servicepersonal eine Wartung und Analyse der Arbeitsgeräte 110 durchführen kann, ohne sich direkt am Ort des Arbeitsgeräts 110 zu befinden. Beispielsweise kann eine solche Cloud-Applikation 210 dazu verwendet werden, aus der Ferne Einstellungsparameter der ECU 120 einzusehen und zu ändern, Fehler- und Eventcodes auszulesen, Sensordaten einzusehen, Diagnose und Fehlersuche Codes einzusehen und die ECU software over-the-air zu aktualisieren.

Insbesondere können die Cloud-Applikationen 210 auch Funktionen bereitstellen, die den Betrieb des Arbeitsgeräts 110 optimieren, beispielsweise eine Optimierung der Steuerungsparameter des Arbeitsgeräts 110 vor und/oder während des Betriebs oder eine vorrausschauende Wartung des Arbeitsgeräts 110. Hierzu kann eine oder mehrere der Cloud-Applikationen 210 ein Optimierungsmodul 220 aufweisen, das eine künstliche Intelligenz 230 aufweist, um Steuerungsparameter des landwirtschaftlichen Arbeitsgeräts 110 zu optimieren. Hierzu kann die künstliche Intelligenz 230 mit Daten der Verwendung einer Vielzahl gleicher oder ähnlicher Arbeitsgeräte trainiert werden. Die vom Optimierungsmodul 220 berechneten optimierten Steuerungsparameter können dann vor oder während der Verwendung des Arbeitsgeräts 110 von der Cloud 200 über das Gateway 1 direkt an die ECU 120 des Arbeitsgeräts 110 übertragen werden. Hierbei kann der Benutzer über das Terminal 410 um seine Zustimmung zur Verwendung der optimierten Steuerungsparameter gefragt werden, oder die optimierten Steuerungsparameter können unmittelbar verwendet werden, wenn dies gewünscht ist.

Das Gateway 1 kann weiterhin eine Gateway-interne wiederaufladbare Stromquelle 60 aufweisen. Diese macht das Gateway 1 unabhängig von einer externen Stromversorgung über den Traktor 2 oder über die ECU 120. Bevorzugt kann die Stromquelle 60 über eine Solarzelle 62 am Arbeitsgerät aufgeladen werden.

Das Gateway 1 kann weiterhin eine Bluetooth-Schnittstelle 80 aufweisen. Diese Bluetooth-Schnittstelle dient bevorzugt zur Kommunikation mit einem Mobilgerät 300, das als weitere Benutzerschnittstelle für das Gateway 1 oder die ECU 120 dienen kann. Insbesondere kann auf dem Mobilgerät eine Geräte-Applikation 310 ablaufen, die zur Kommunikation des Mobilgeräts 30) über Bluetooth mit dem Gateway 1 eingerichtet ist. Die Geräte-Applikation 310 kann ein Optimierungsmodul 320 aufweisen, das ähnlich zur Cloud-Applikation 210 ebenfalls Steuerungsparameter für das Arbeitsgerät 110 berechnen kann. Insbesondere können mit der Geräte-Applikation 210 Steuerungsparameter berechnet werden, indem der Benutzer vor Ort Ausgangswerte eingibt, z.B. die Feldgröße. Die Geräte-Applikation 310 kann dann die berechneten Steuerungsparameter über das Gateway 1 direkt an die ECU 120 des Arbeitsgeräts 110 übertragen, ohne dass der Benutzer hierzu manuelle Eingaben machen müsste.

Das Gateway 1 kann weiterhin einen GNSS-Empfänger 90 zum Empfang von Positionsdaten von einem globalen Satellitennavigationssystem aufweisen. Damit kann das Gateway 1 Positionsdaten empfangen und diese an die Cloud 200 übertragen, selbst wenn der Traktor 2 keinen GNSS-Empfänger besitzt. Damit kann die Position des Arbeitsgeräts 110 auch dann bestimmt werden, wenn diese nicht an einen Traktor 2 angeschlossen ist. Dies ermöglicht beispielsweise Geofencing-Anwendungen in der Cloud 200, bei denen der Benutzer beispielsweise informiert wird, wenn das Arbeitsgerät 110 aus seinem definierten Gebiet bewegt wird, was einen Diebstahl des Arbeitsgeräts 110 bedeuten könnte.

Für die Geofencing-Funktionalität ist es vorteilhaft, wenn das Gateway 1 fest mit dem Arbeitsgerät 110 verbunden ist. Entsprechend weist das Gateway 1 ein wasserdichtes Schutzgehäuse 70 auf (vgl. Fig. 3), das mittels Befestigungsmitteln 72 fest mit dem Arbeitsgerät verbunden ist. Weiterhin ist vorteilhaft, wenn das Gateway 1, wenn es nicht in Benutzung ist, zur Schonung der Stromquelle 60 von dem Prozessor 10 in einen Schlafzustand versetzt wird in dem nur ein Timerprozess aktiv ist, der das Gateway 1 in vorbestimmten Zeitabständen zumindest teilweise aufweckt, um beispielsweise Positionsdaten an die Cloud 200 zu übertragen. Das Aufwecken des Gateways 1 aus dem Schlafzustand kann auch mittels eine Bewegungssensors 95 des Gateways 1 erfolgen, wenn der Bewegungssensor 95 eine Bewegung des Arbeitsgeräts 110 detektiert.

Das Gateway 1 kann weiterhin ein WLAN-Modul 50 zur Erzeugung eines lokalen WLAN-Hotspots aufweisen. Mit der WLAN-Schnittstelle 50 kann das Gateway 1 für externe Geräte, etwa externe Mobilgeräte oder externe ECU en anderer Arbeitsgeräte einen Internetzugang bereitstellen. Das WLAN-Modul 50 kann eine dynamische Firewall aufweisen, um den Internet-Zugang nur für registrierte Geräte oder Benutzer zuzulassen. Weiterhin kann das WLAN-Modul bevorzugt zur Kommunikation mit einem Mobilgerät 300 dienen, das als weitere Benutzerschnittstelle für das Gateway 1 oder die ECU 120 dienen kann. Insbesondere kann auf dem Mobilgerät eine Geräte-Applikation 310 ablaufen, die zur Kommunikation des Mobilgeräts 30) über WLAN mit dem Gateway 1 eingerichtet ist. Über das WLAN-Modul 50 können höhere Datenraten übertragen werden als über die Bluetooth-Schnittstelle 80.

Zur Herstellung einer gesicherten Datenverbindung des Gateway 1 zur Cloud 200, bevorzugt für den Servicefall, wird folgendes Verfahren mit den folgenden Schritten vorgeschlagen, die in der angegebenen Reihenfolge durchgeführt werden:
Erzeugen einer Verbindungsanfrage von dem Gateway 1 über eine Mobilfunkschnittstelle an eine in der Cloud 200 ablaufende Cloud-Applikation 210 wobei die Verbindungsanfrage einen eindeutigen ersten Code enthält;
Empfangen des ersten Codes durch die Cloud-Applikation 210 und Erzeugen durch die Cloud-Applikation 210 aus dem ersten Code einen eindeutigen zweiten Code;
Senden des zweiten Codes durch Cloud-Applikation an das Gateway 1;
Anzeigen des zweiten Codes durch das Gateway 1 auf einer Benutzerschnittstelle eines externen Terminals 310;
(manuelles) Ablesen des zweiten Codes;
(manuelles) Eingeben des zweiten Codes in die Cloud-Applikation 210;
Prüfen des zweiten Codes durch die Cloud-Applikation 210; und
nach erfolgreicher Prüfung, Erstellen einer gesicherten bidirektionalen Datenverbindung der Cloud 200 mit dem Gateway 1 zum Austausch von Daten einer ECU 120 des Arbeitsgeräts 110 mit der Cloud-Applikation 210.

Der Verbindungsaufbau kann alternativ auch durch das die Cloud-Applikation 210 ausgelöst werden.

Der erste und/oder zweite Code kann eine Darstellung von Informationen oder Anweisungen in einem Format sein, das von einem System, einer Vorrichtung oder einem menschlichen Benutzer erkannt, interpretiert oder verarbeitet werden kann. Dazu gehören unter anderem Zahlenfolgen, E-Mails, alphanumerische Zeichen, Symbole, Strichcodes, QR-Codes, Audiosignale, Spracheingaben, visuelle Muster oder jede andere Form von kodierten Daten, die zur Identifizierung, Kommunikation oder Verarbeitung verwendet werden können.

Im normalen Betrieb des Gateways 1 erfolgt ein Authentifizierungsprozess zwischen Gateway 1 und Cloud-Applikation 210, bei dem die Cloud-Applikation 210 Zertifikate auf dem Gateway 1 überprüft. Wenn dies erfolgreich ist, wird eine regelmäßige Datenübertragung von Telematikdaten vom Gateway zur Cloud eingerichtet. Der Benutzer braucht hierbei nichts zu tun.

Falls das System 100 neben dem Gateway 1 mehrere ISOBUS-Teilnehmer aufweist, beispielsweise die Steuerung 400 oder das Terminal 410 des Traktors 2, kann es vorteilhaft sein die Daten zur Übertragung an die Cloud anhand des folgenden Verfahrens zu filtern:
1. Empfangen einer Nachricht über eine ISOBUS-Schnittstelle 30 oder die Geräteschnittstelle 40, die eine Eingabe eines Gateways 1 oder ISOBUS Teilnehmers 400 anzeigt;
2. Bestimmen der empfangenen Nachricht unter Verwendung eines Kontextanalysemoduls 19 des Gateways 1, um das Vorhandensein von Identifikatoren, wie beispielsweise eine zeitkritische Datenkommunikation, zu bestimmen, die einem vordefinierten Satz von in einem System registrierten Endgerätediensten zugeordnet sind;
3. Bestimmen, dass die empfangene Nachricht jegliche Daten ausschließt, die für einen gegebenen Endgerätedienst der mehreren Endgerätedienste bestimmt sind, die bei dem System registriert sind;
4. als Reaktion auf das Bestimmen, Identifizieren eines Gateways 1 unter mehreren bei dem System registrierten Gateways 1, um die empfangene Nachricht zu verarbeiten; und
5. Veranlassen des identifizierten Gateways 1, die Nachricht an die Cloud 200 zu senden.

Weiterhin kann der der Mehrfach-CAN-Dämon 18 ein Kontext-Analysemodul 19 aufweisen, das über den ISOBUS angeschlossene Terminals 410 oder weitere Gateways 1 anderer landwirtschaftlicher Arbeitsgeräte 110 identifiziert, wobei der Mehrfach-CAN-Dämon 18 einen der Gateways 1 zur Datenübertragung an die Cloud 200 priorisiert. Diese Priorisierung kann t regelbasiert nach aktuellen Kriterien im Betrieb erfolgen, beispielsweise anhand der aktuellen Rechenauslastung eines Gateways 1 oder Terminals 410 oder anhand der Notwendigkeit einer Echtzeit-Datenkommunikation zwischen der Cloud 200 und dem Gateway 1 eines Arbeitsgeräts 110.

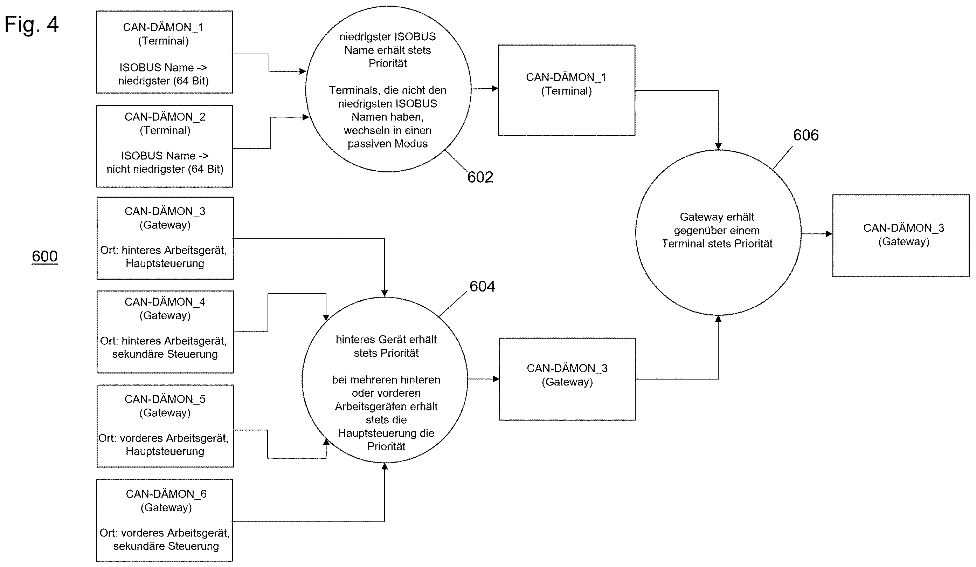

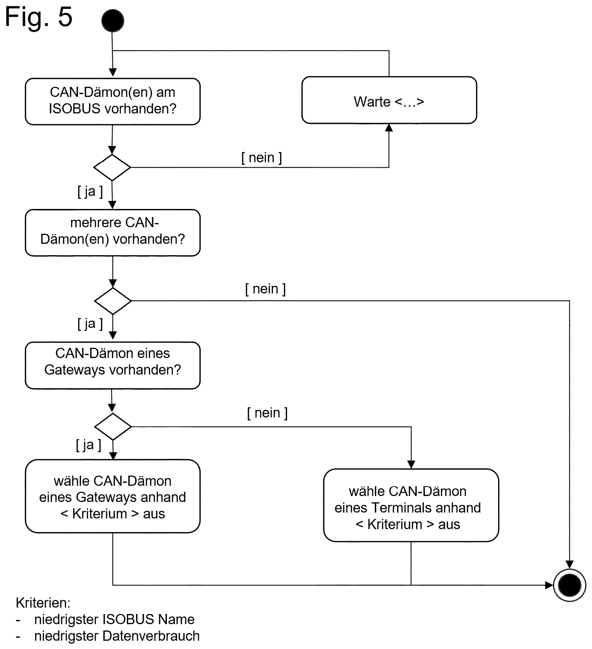

Alternativ können auch globale Regeln aufgestellt werden, nach denen ein Gateway 1 oder ein Terminal 410 zur Datenübertragung an die Cloud 200 priorisiert wird. In Fig. 4 ist ein beispielhafter Entscheidungsbaum 600 und in Fig. 5 ein Verfahren zur Priorisierung von Gateways 1 und Terminals 410 in einem ISOBUS-System dargestellt. Nach Entscheidung 602 erhält der ISOBUS-Teilnehmer mit dem niedrigsten ISOBUS-Namen Priorität. Terminals 410, die nicht den niedrigsten ISOBUS-Namen haben, wechseln in einen passiven Modus. Nach Entscheidung 604 erhält das Gateway 1 des hinten am Traktor 2 angebrachten Arbeitsgeräts 110 Priorität weil es typischerweise mehr Leistung benötigt oder einen höheren Betriebsbedarf hat, weshalb es wichtig ist, ihre Kommunikation und Steuerung zu priorisieren, um eine nahtlose Funktionalität sicherzustellen. Wenn mehrere hintere und vordere Arbeitsgeräte 110 vorhanden sind, erhält das Gateway 1 der jeweiligen Haupt-ECU 120 Priorität. Nach Entscheidung 608 erhält ein Gateway 1 immer Priorität gegenüber einem Terminal 410.

In einer alternativen Ausführungsform kann als Kriterium für die Priorisierung auch der Datenverbrauch der einzelnen Gateways 1 und Terminals 410 herangezogen werden.

Die Kriterien für die Priorisierung können daher der niedrigste ISOBUS-Name und/oder das Gerät mit dem niedrigsten Datenverbrauch und/oder die Signalstärke und/oder die niedrigste Latenz und/oder der Verbindungstyp (verkabelt vs. drahtlos, Wi-Fi vs. Mobilfunk) und/oder die Batterielebensdauer der Anbaugeräte, wobei diejenigen bevorzugt werden, die weniger Strom verbrauchen, und/oder das Sicherheitsniveau der Verbindung und/oder der Protokoltype (die höhere Number welches die neuste Version aufweist) und/oder der Anbauort des Arbeitsgeräts (hinten oder vorne am Traktor 2, wobei das hinten angebrachte Anbaugerät gegenüber dem vorne angebrachten Angebracht wird, bevorzugt wird. Mindestens eines oder eine Kombination dieser Kriterien kann zur Priorisierung herangezogen werden.

Bevorzugt kann das Kriterium der niedrigste ISOBUS-Namen und der Datenverbrauch der Gateways 1 und der Terminals 410 sein.

Der Datenverbrauch kann beispielsweise davon abhängen, wie oft ein Datenbündel in einem bestimmten Zeitraum über die Mobilfunkverbindung aktualisiert wird. Beispielsweise kann das Datenbündel 1 -3 Mbyte groß sein.

Die Wartezeit in Fig. 5 zum Detektieren von CAN-Dämonen auf dem ISOBUS kann vorzugsweise im Bereich von 0-254 Sekunden, vorzugsweise 0-500 Sekunden, vorzugsweise 0-800 Sekunden oder im Bereich von 0-6 Minuten liegen.

## Patentansprüche

1. Gateway (1) eines landwirtschaftlichen Arbeitsgeräts (110) für eine bidirektionale Datenkommunikation des Arbeitsgeräts (110) mit einer Cloud (200), wobei das Gateway (1) aufweist:
einen Prozessor (10);
eine Geräteschnittstelle (20) zur direkten Kommunikation mit einer ECU (Electronic Control Unit) (120) des Arbeitsgeräts (110);
eine von der Geräteschnittstelle (20) unabhängige ISOBUS-Schnittstelle (30) zur Kommunikation mit ISOBUS-Teilnehmern (400);
eine Mobilfunkschnittstelle (40) zur drahtlosen Kommunikation mit einem Mobilfunknetz (202), wobei das Gateway (1) eingerichtet ist über das Mobilfunknetz (202) eine Datenverbindung zur Cloud (200) zu erstellen;
einen Mehrfach-CAN-Dämon (18), zur Datenverbindung mit mehreren ISOBUS-Teilnehmern über den ISOBUS, wobei der Mehrfach-CAN-Dämon regelbasiert die Datenverbindung der ISOBUS-Teilnehmer (400) zur Cloud (200) steuert.

2. Gateway gemäß Anspruch 1, wobei der Mehrfach-CAN-Dämon (18) ein Kontext-Analysemodul (19) aufweist, das über den ISOBUS angeschlossene Terminals (410) und/oder weitere Gateways (1) anderer landwirtschaftlicher Arbeitsgeräte (110) identifiziert, wobei der Mehrfach-CAN-Dämon (18) einen der Gateways (1) zur Datenübertragung an die Cloud (200) priorisiert.

3. Gateway gemäß einem der Ansprüche 1 oder 2, wobei der Prozessor (10) eingerichtet ist, das Gateway in vordefinierten Zeitabständen aus einem Schlafzustand aufzuwecken, um dann ausgewählte Daten, insbesondere Positionsdaten, an die Cloud (200) zu übertragen.

4. Gateway gemäß einem der Ansprüche 1 bis 3, wobei die ISOBUS-Schnittstelle (30) eingerichtet ist zur Kommunikation mit einem externen Terminal (310), das eine Benutzerschnittstelle des Gateways (1) bereitstellt.

5. Gateway gemäß einem der Ansprüche 1 bis 4, weiterhin aufweisend ein WLAN-Modul (50) zum Erzeugen eines lokalen WLAN-Hotspots um eine Internetverbindung für externe WLAN-Geräte über das Gateway (1) bereitzustellen, wobei das WLAN-Modul (50) eine dynamische Firewall umfasst, die eine Internetverbindung über das Gateway (1) nur für registrierte WLAN-Geräte zulässt.

6. Gateway gemäß einem der Ansprüche 1 bis 5, weiterhin aufweisend einen Bewegungssensor (95) und/oder einen Audiotrigger oder Sprachbefehl, wobei das Gateway (1) eingerichtet ist, aufgrund einer durch den Bewegungssensor (95) festgestellten Bewegung und/oder den Audiotrigger oder Sprachbefehl aus einem Schlafzustand aufzuwachen und Positionsdaten an die Cloud (200) zu senden.

7. System (100), aufweisend ein landwirtschaftliches Arbeitsgerät (110), ein Gateway (1) gemäß einem der Ansprüche 1 bis 6 und eine in der Cloud (200) ablaufende Cloud-Applikation (210), wobei die Cloud-Applikation (210) Daten des Arbeitsgeräts (110) von dem Gateway (1) empfängt und Daten über das Gateway (1) an eine ECU (120) des Arbeitsgeräts (110) sendet.

8. System (100) gemäß Anspruch 7, wobei das Gateway (1) und die Cloud-Applikation (210) eingerichtet sind, Daten auszutauschen für mindestens eine der folgenden Funktionen:
Flottenmanagement Funktionen;
Geofencing Funktionen;
Fernservice und Fernsupport Funktionen;
Transfer von Dateien;
Optimierung der Steuerungsparameter des Arbeitsgeräts (110) vor und/oder während des Betriebs;
Vorrausschauende Wartung des Arbeitsgeräts (110) und/oder Over-the-air Updates der ECU (120) des Arbeitsgeräts (110) oder des Gateways (1).

9. System (100) gemäß einem der Ansprüche 7 oder 8, wobei die Cloud-Applikation (210) ein Optimierungsmodul (220) aufweist, das eine künstliche Intelligenz (230) aufweist, um Steuerungsparameter des landwirtschaftlichen Arbeitsgeräts (110) zu optimieren, wobei die optimierten Steuerungsparameter von der Cloud (200) über das Gateway (1) an die ECU (120) des Arbeitsgeräts (110) übertragen werden.

10. System (100) gemäß Anspruch 9, wobei das Optimierungsmodul (220) während der Verwendung des landwirtschaftlichen Arbeitsgeräts (110) Sensordaten des landwirtschaftlichen Arbeitsgeräts (110) über das Gateway (1) empfängt und daraus die Steuerungsparameter in Echtzeit berechnet und über das Gateway (1) an die ECU (120) überträgt.

11. System gemäß einem der Ansprüche 9 oder 10, wobei das Optimierungsmodul (220) aus den übertragenen Daten Anomalien im Betrieb des landwirtschaftlichen Arbeitsgerätes (110) detektiert und daraus mit der künstlichen Intelligenz (230) optimierte Steuerungsparameter oder Wartungsaktionen berechnet und über ein ISOBUS-Terminal (410) oder einen Wartungscomputer (500) anzeigt.

12. System gemäß einem der Ansprüche 9 bis 11, wobei das Optimierungsmodul (220) aus den übertragenen Daten aktuelle Leistungswerte des landwirtschaftlichen Arbeitsgerätes (110) berechnet und diese mit einem vorab gespeicherten Satz von Leistungswerten des Typs des landwirtschaftlichen Arbeitsgerätes (110) vergleicht, um Abweichungen von einem optimalen Betrieb zu ermitteln.

13. System gemäß einem der Ansprüche 7 bis 12, weiterhin aufweisend ein Mobilgerät (300), wobei das Mobilgerät (300) eine Geräte-Applikation (310) aufweist, die zur Kommunikation des Mobilgeräts (300) über Bluetooth mit dem Gateway (1) eingerichtet ist, wobei die Geräte-Applikation (310) ein Optimierungsmodul (320) aufweist, das Steuerungsparameter für das Arbeitsgerät (110) berechnet und die Geräte-Applikation (310) eingerichtet ist, die berechneten Steuerungsparameter über das Gateway (1) an das Arbeitsgerät (110) zu übertragen.

14. System gemäß Anspruch 13, wobei das Gateway (1) die Entfernung des Mobilgeräts (300) zum Gateway (1) ermittelt und basierend auf der Entfernung Funktionen des Gateways (1) und/oder des Arbeitsgeräts (110) aktiviert oder deaktiviert.

15. Verfahren zur Erstellung einer gesicherten Datenverbindung eines Gateways (1) eines landwirtschaftlichen Arbeitsgeräts (110), insbesondere eines Gateways (1) gemäß einem der Ansprüche 1 bis 6, für eine bidirektionale Datenkommunikation des Arbeitsgeräts (110) mit einer Cloud (200), aufweisend die folgenden Schritte:
Erzeugen einer Verbindungsanfrage von dem Gateway (1) über eine Mobilfunkschnittstelle an eine in der Cloud (200) ablaufende Cloud-Applikation (210) wobei die Verbindungsanfrage einen eindeutigen ersten Code enthält;
Empfangen des ersten Codes durch die Cloud-Applikation (210) und Erzeugen durch die Cloud-Applikation (210) aus dem ersten Code einen eindeutigen zweiten Code;
Senden des zweiten Codes durch Cloud-Applikation an das Gateway (1);
Anzeigen des zweiten Codes durch das Gateway (1) auf einer Benutzerschnittstelle eines externen Terminals (310);
manuelles Ablesen des zweiten Codes;
manuelles Eingeben des zweiten Codes in die Cloud-Applikation (210);
Prüfen des zweiten Codes durch die Cloud-Applikation (210); und
nach erfolgreicher Prüfung, Erstellen einer gesicherten bidirektionalen Datenverbindung der Cloud (200) mit dem Gateway (1) zum Austausch von Daten einer ECU (120) des Arbeitsgeräts (110) mit der Cloud-Applikation (210).
